# EUROPÄISCHE PATENTANMELDUNG

(11) **EP 0 933 404 A2**
(43) Veröffentlichungstag der Anmeldung: **04.08.1999**
(21) Anmeldenummer: 99101891.2
(22) Anmeldetag: 29.01.1999
(51) Int. Cl.: C09C 1/24, C09C 1/00

(54) **Rotbraun ausbrennende Farbkörper, Verfahren zu deren Herstellung und deren Verwendung**

(30) Priorität: 03.02.1998 DE 19804109
(71) Anmelder: CERDEC AKTIENGESELLSCHAFT KERAMISCHE FARBEN, D-60327 Frankfurt (DE)
(72) Erfinder: Hanich, Jürgen Dr., 60322 Frankfurt (DE); Jaschik, Gillian, 60435 Frankfurt (DE); Monari, Giacinto Dr., 41040 Corlo (MO) (IT); Wacker, Jörg Dr., 60596 Frankfurt (DE)

(57) **Zusammenfassung**

Die Erfindung stellt neue rotbraun ausbrennende Farbkörper zum Einfärben keramischer Massen bereit. Die Farbkörper enthalten Fe₂O₃ und/oder eine beim Brand Fe₂O₃ bildene Fe-Verbindung in gleichmäßiger Verteilung in einer pulverförmigen Matrix auf der Basis eines oxidischen oder/und silikatischen, zu mindestens 50 % röntgenamorphem Materials mit einer spezifischen Oberfläche (BET) von mindestens 40 m²/g und sind erhältlich durch intensives gemeinsames Kontaktieren der Bestandteile. Bevorzugt besteht die Matrix aus 80 bis 100 % amorphem SiO₂ oder SiO₂-reichem Silikat mit einer BET-Oberfläche von 90 bis 300 m²/g und 0 bis 20 % eines Hilfsmittels, wie Siliconöl. Die Farbkörper lassen sich durch Trockenmahlung herstellen.

## Beschreibung

Die Erfindung betrifft rotbraun ausbrennende Farbkörper, enthaltend Eisen(III)oxid (Fe₂O₃) und/oder eine oder mehrere beim Brand Fe₂O₃ bildende Eisenverbindungen als farbgebende Komponente in gleichmäßiger Verteilung in einer pulverförmigen Matrix auf der Basis eines oxidischen und/oder silikatischen Materials. Die Erfindung betrifft ferner ein Verfahren zur Herstellung der Farbkörper sowie deren Verwendung zum Einfärben keramischer Massen.

Bei der Herstellung von sogenanntem Grès Porcellanato, einer Feinsteinzeugmasse für den Schnellbrand, die in der modernen Fliesenherstellung eine immer größere Bedeutung gewinnt, werden im großen Umfang eisenhaltige Farbkörper eingesetzt, um der Masse nach dem Brand eine attraktive rotbraune Farbe zu geben.

Grès de Thiviers, ein natürlich vorkommender Farbkörper, bestehend aus etwa 90 % Quarz und etwa 10 % Goethit (FeOOH), wird verwendet, um rotbraune Farbtöne zu erzeugen. In diesem Naturprodukt ist das Eisenoxidhydrat durch eine Umhüllung aus Quarz vor der chemischen Reaktion mit den Massebestandteilen beim Brand bei etwa 1100 bis 1250 °C geschützt. Nachteile dieses Farbkörpers sind die Schwankungen des Farbtons, die vergleichsweise hohe Konzentration an farbgebendem Material, die nötig ist, um ansprechende Farbtöne zu erzielen, sowie die zur Neige gehenden natürlichen Ressourcen dieses Pigments. Daher kommt der Suche nach synthetischen Produkten mit gleichen oder besseren Eigenschaften als jenen des Naturproduktes eine große Bedeutung zu.

Gemäß JP 02-263870 A sind violette Farbpigmente zugänglich, wenn FeOOH, SiO₂ und K₂CO₃ gemischt, gemahlen und kalziniert werden. Der gewünschte rotbraune Farbton wird nicht erhalten.

Gemäß EP-A 0 563 688 lassen sich rote keramische Gießmassen im Schnellbrand erzeugen, wenn Ton mit üblichen Additiven und einem Eisenoxidpigment gemischt, geformt und gebrannt wird. Das zu verwendende Pigment muß weniger als 0,6 % Si und weniger als 0,06 % Mn enthalten und besteht aus alpha-FeOOH, gamma-FeOOH, alpha-Fe₂O₃ und/oder Fe₃O₄.

Wie die Praxis zeigte, sind marktübliche Eisenoxidpigmente, auch solche mit den zuvor genannten Kriterien bezüglich des Si- und Mn-Gehalts, in niedriger Konzentration allein oder in Abmischung mit Quarz zur Einfärbung wenig geeignet, da sich das Eisenoxid weitgehend in den Massen auflöst. Bei höherer Konzentration an Eisenoxid resultiert zwar eine Farbwirkung, diese ist allerdings auf unattraktive braune Farbtöne beschränkt. Die Ursache für dieses Verhalten wird darin gesehen, daß das Eisenoxid bei hoher Temperatur zum Kristallwachstum neigt und das entstehende grobteilige Eisenoxid in der keramischen Masse zu wenig brillanten Farben führt.

Aus Europa Chemie 31-32/91, Seite 4, ist bekannt, daß die Benetzungseigenschaften des Bayer Pigments Bayferrox® durch eine Nachbehandlung mit Aluminiumoxid verbessert werden und sich derartige mikronisierte Fe₂O₃-Rotpigmente für kritische Bindemittelsysteme eignen. Die Art der Nachbehandlung, die Menge Al₂O₃ und dessen Struktur lassen sich diesem Dokument nicht entnehmen. Nach Versuchen der Erfinder der vorliegenden Anmeldung eignen sich die genannten mikronisierten Rotpigmente nicht zum Einsatz als Farbkörper in keramischen Massen. Beim Brand kommt es offensichtlich zu einer Sinterung des Fe₂O₃ und damit zu einer Farbveränderung von rot nach braun.

In Ullmann's Enzyklopädie der technischen Chemie, 4. Auflage, Band 10, Seiten 437-438 werden die Zusammensetzungen von Emails sowie dafür geeigneter Glasflüsse angegeben. Gemäß der auf Seite 438 angegebenen Definition für anorganische Farbkörper, wonach sich die darin enthaltenen anorganischen Farbpigmente beim Einbrennen nicht verändern, ist ein Gemisch aus einer Glasfritte und Fe₂O₃ kein Farbkörper, weil sich das Eisenoxid während des Brands im Fluß auflöst. Zur Herstellung farbiger Emaillierungen werden den Emails bei der Vermahlung Farbkörper zugesetzt. Das Dokument sagt nichts über die Herstellung des Farbkörpers. Die in Emails eingesetzten Glasfritten sind zwar amorph, die spezifische Oberfläche nach BET liegt üblicherweise um/unter 1 m²/g bei einem d₅₀-Wert um 1 µm.

Die DE 32 11 327 A1 richtet sich auf Eisenoxidpigmente mit einem Eisen(II)oxidgehalt (Seite 10, Zeile 11). Übliche FeO enthaltende Pigmente sind schwarz und weisen eine BET-Oberfläche von 12 bis 18 m²/g auf. Lediglich für magnetische Zwecke werden Produkte verwendet, die 40 m²/g überschreiten können. Die vorliegende Erfindung richtet sich dagegen auf rotbraun und nicht schwarz ausbrennende Farbkörper.

Von den Erfindern der vorliegenden Anmeldung wurde versucht, durch ein Fällungsverfahren Eisenoxid-Pigmente mit Kieselsäure zu beschichten, um zu Produkten mit ähnlich guten Farbkörper-Eigenschaften zu gelangen wie Grès de Thiviers. Trotz eines an sich geeigneten Beschichtungsverfahrens waren keine Produkte zugänglich, bei denen die Stärke der Beschichtung ausreichend war, um dem Angriff der Bestandteile der keramischen Masse zu widerstehen. Zudem kam es bei hoher Temperatur zu einem Kornwachstum und damit Minderung der Farbbrillanz.

Ein weiterer Versuch richtete sich auf die gemeinsame Fällung von Kieselsäure und Eisenhydroxid aus Wasserglas und Eisensalz-Lösungen. Diese Fällprodukte waren infolge der Feinteiligkeit des entstehenden Eisenhydroxids und dessen großer Reaktivität bei hoher Temperatur wieder einem erheblichen Kristallwachstum ausgesetzt; wenig attraktive Farbtöne waren die Folge.

Im Handel ist ein Farbkörper auf der Basis von Fe₂O₃ in einer Matrix aus kristallinem SiO₂ erhältlich - CK 32055 der Firma Ferro. Dieser Farbkörper führt bei der Einfärbung keramischer Massen zu Farben mit hohem Blauanteil (hoher b*-Wert) und ungenügender Farbtiefe (hoher L*-Wert), bestimmt im CIELAB-System nach DIN 5033.

Ein coloristisch verbessertes Produkt ist das im Handel erhältliche CP RE-18 der Firma Ithaka (JP). Dieser Farbkörper besteht aus etwa 10 Gew.-% Fe₂O₃ in einer Matrix aus Kieselsäure (SiO₂), wovon etwa 15 Gew.-% kristallin und etwa 85 Gew.-% amorph sind. Bei dem amorphen SiO₂ handelt es sich gemäß Trans-Elektronen-Mikroskopie (TEM) um im wesentlichen kugelförmige Partikel mit einem Teilchendurchmesser um 40 nm. Die spezifische Oberfläche des Farbkörpers, bestimmt nach BET (N₂) gemäß DIN 66131 beträgt 36 m²/g.

Aufgabe der Erfindung ist, einen weiteren Farbkörper zur Einfärbung keramischer Massen bereitzustellen, der leicht und in wirtschaftlicher Weise zugänglich ist und in zuverlässiger Weise die Herstellung brillanter und farbintensiver rotbrauner keramischer Fliesen gestattet.

Gefunden wurde ein rotbraun ausbrennender Farbkörper, enthaltend Fe₂O₃ und/oder eine oder mehrere beim Brand Fe₂O₃ bildende Eisenverbindungen als farbgebende Komponente in gleichmäßiger Verteilung in einer pulverförmigen Matrix auf der Basis eines oxidischen und/oder silikatischen Materials, der dadurch gekennzeichnet ist, daß das oxidische und/oder silikatische Material der Matrix eine spezifische Oberfläche nach BET (DIN 66131) von gleich oder größer 40 m²/g aufweist und zu mindestens 50 % röntgenamorph ist, der Farbkörper die farbgebende Komponente in einer Menge von 1 bis 25 Gew.-%, berechnet als Fe₂O₃, enthält und daß er erhältlich ist durch intensives miteinander Inkontaktbringen der farbgebenden Komponente mit dem oxidischen und/oder silikatischen Material.

Erfindungsgemäße Farbkörper sind erhältlich durch gleichmäßige Verteilung der farbgebenden Komponente in einer pulverförmigen Matrix auf der Basis eines oxidischen und/oder silikatischen Materials, wobei die farbgebende(n) Eisenverbindung(en) und das oxidische und/oder silikatische Material der Matrix einschließlich gegebenenfalls anwesender Hilfsstoffe in einer Vorrichtung zum Mischen und/oder Mahlen intensiv, das heißt, unter Eintrag einer wirksamen Menge mechanischer Energie gemeinsam gemischt und/oder gemahlen werden.

Das intensive miteinander Inkontaktbringen des Basismaterials der Matrix mit der farbgebundenen Komponente ist für die Ausbildung der im Ausbrand rotbraunen Farbe mit hohem Rotanteil, hoher Brillanz und Intensität von Bedeutung. Ein einfaches trockenes Abmischen der Bestandteile, etwa eine 2-minütige Behandlung in einer Schlagmühle, wie es bei der Herstellung üblicher Farbkörper aus Metalloxiden ausreicht, ist bei der Herstellung erfindungsgemäßer Farbkörper unzureichend, weil der Rotwert a* und der Chromawert C* viel zu niedrig und der L*-Wert viel zu hoch sind (Cielab-System nach DIN 5033, Teil 3). Eine Steigerung des Rotwerts a*, Absenkung des Blauwerts b* sowie des L*-Werts läßt sich durch intensiveres Kontaktieren, etwa 0,1- bis 10-stündiges Mahlen in einer Intensiv-Misch-/Mahlvorrichtung bewirken. Dieses Kontaktieren kann naß oder trocken erfolgen, wobei ein trockenes Kontaktieren bevorzugt wird, weil hiermit in kürzerer Zeit die gewünschten Farbwerte erzielt werden können. Unter Verwendung einer Intensiv-Misch-/Mahlvorrichtung, wie insbesondere eines Attritor-Mischers, einer Schwingmühle oder einer Kugelmühle lassen sich die gewünschten Farbwerte bei einer trockenen Misch-/Mahlbehandlung im allgemeinen innerhalb etwa einer halben bis 5 Stunden erhalten. Der Fachmann wird die zu verwendende Misch-/Mahlvorrichtung so betreiben, daß eine wirksame Friktion zwischen den Bestandteilen in möglichst kurzer Zeit erreicht wird. Durch den Eintrag mechanischer Energie in das Pulvergemisch werden beim Einsatz üblicher Eisenoxidpigmente oder Quellen hierfür diese in wirksamer Weise in der Matrix dispergiert. Um gute Farbwerte bevorzugter Farbkörper zu erreichen, ist eine weitgehende Einbettung oder Umhüllung der Fe-Quelle, wie insbesondere eines Eisenoxids aus der Reihe Fe₂O₃, FeOOH und Fe₃O₄, in einer vorzugsweise vollständig amorphen Kieselsäure oder eines SiO₂-reichen Silikats notwendig. Durch die in das Pulvergemisch eingebrachte mechanische Energie wird das Eisenoxid desagglomeriert und dispergiert und auf die große Oberfläche des Trägermaterials (= Matrix), das seinerseits desintegriert wird, verteilt und zum großen Teil von diesem umhüllt. Das normalerweise bei hoher Temperatur, also beim Brand, einsetzende Kristallwachstum, und die damit einhergehende Änderung des Farbtons nach blau und weniger rot wird durch die räumliche Trennung der Eisenoxidpartikel voneinander wirkungsvoll unterdrückt. Für die Qualität des Pigments ist eine hinreichend große Oberfläche des Trägermaterials wichtig, damit eine ausreichende räumliche Trennung der Eisenoxidkristallite möglich ist.

Es wurde festgestellt, daß durch Mitverwendung eines Hilfsstoffes aus der Reihe der Siliconöle, wie insbesondere Poly(dimethylsiloxan), sowie der Alkoxysilane der allgemeinen Formel (RO)₄₋ₙSiR'ₙ oder niederen Kondensationsprodukten derselben Farbkörper mit weiter verbesserten Farbwerten erhältlich sind. In der allgemeinen Formel steht R' für einen über ein C-Atom an das Si-Atom gebundenen organischen Rest, etwa einer C₁- bis C₈-Alkylgruppe, einer ω-Aminoalkylgruppe, einer Methacryloyloxyalkylgruppe oder einer sulfidischen Gruppe, z.B. -(CH₂)₃-S₄-(CH₂)₃-Si(OR)₃; R steht für einen niederen Alkylrest, wie Methyl, Ethyl, n- und iso-Propyl; n steht in der Formel für eine ganze Zahl 0, 1, 2 oder 3. Üblicherweise werden solche Hilfsstoffe in einer Menge von 0,1 bis 10 Gew.-%, insbesondere 0,5 bis 3 Gew.-%, jeweils bezogen auf die Matrix, eingesetzt; die Einsatzmenge kann auch weiter erhöht werden, etwa auf 20 Gew.-%, bezogen auf die Matrix, jedoch wird dadurch keine weitere Verbesserung erzielt. Durch die Mitverwendung des genannten Hilfsstoffes kann bei sonst gleichen Mahl-/Misch-bedingungen der a*-Wert um einige Einheiten erhöht werden, oder die Misch-/Mahldauer kann verkürzt werden, um die angestrebten Farbwerte zu erhalten.

Bevorzugte rotbraun ausbrennende Farbkörper weisen bei einer Einfärbung einer Feinsteinzeugmasse (Grès Porcellanato) mit 4 Gew.-% Farbkörper mit einem Fe₂O₃-Gehalt um 10 Gew.-% nach dem Brand folgende Farbwerte auf - gemessen im Cielab-System (DIN 5033):
L* kleiner 60, insbesondere 50 bis 57;
a* größer 10, insbesondere 12 bis 18;
b* 10 bis 18, insbesondere 12 bis 15.

Erfindungswesentliche Merkmale richten sich auch auf die Auswahl und die Stoffdaten des Basismaterials der Matrix: Das Basismaterial kann oxidischer und/oder silikatischer Natur sein. Unter den Oxiden sind insbesondere zu nennen: Kieselsäure (SiO₂), B₂O₃, Al₂O₃, SnO₂, Bi₂O₃ und Oxide der Elemente der 3. bis 5. Nebengruppe, insbesondere TiO₂ und ZrO₂. Auch Mischoxide, wie Spinelle und Perowskite, die außer einem der genannten Oxide auch Erdalkali- und/oder Alkalimetalloxide enthalten können, kommen als Basismaterial infrage. Besonders bevorzugt besteht das Basismaterial aus SiO₂ oder SiO₂ ist zumindest der Hauptbestandteil desselben. Bei den silikatischen Basismaterialien handelt es sich vorzugsweise um Silikate von Alkali-, Erdalkali- und Erdmetallen und Gemischen davon, wobei die genannten Metalle zweckmäßigerweise in unterstöchiometrischer Menge anwesend sind. Bevorzugt sind also SiO₂-reiche Silikate, wie Produkte mit einem SiO₂-Gehalt von 80 bis 95 Gew.-%; Beispiele hierfür sind handelsübliche Produkte der Degussa AG, wie Extrusil (91 % SiO₂, 6 % CaO, 2 % Na₂O) und Pasilex (82 % SiO₂, 9,5 % Al₂O₃, 8 % CaO). Das Basismaterial kann hydrophil oder hydrophob sein, üblicherweise ist es hydrophil.

Das zur Herstellung des Farbkörpers zu verwendende Basismaterial der Matrix, bei welchem es sich um einen einzigen Stoff oder um ein Stoffgemisch handelt, soll zu mindestens 50 %, vorzugsweise mehr als 90 % und besonders bevorzugt zu über 99 % röntgenamorph sein und eine spezifische Oberfläche nach BET (DIN 66131 mit N₂ als Meßgas) von gleich oder größer 40 m²/g, vorzugsweise 90 bis 300 m²/g und insbesondere 100 bis 200 m²/g aufweisen. Gemäß einer besonders bevorzugten Ausführungsform besteht das Basismaterial im wesentlichen, nämlich zu 90 bis 100 %, aus röntgenamorphem SiO₂ und/oder röntgenamorphem SiO₂-reichem Silikat, jeweils mit einer BET-Oberfläche im Bereich von 90 bis 300 m²/g. Es zeigte sich, daß die Amorphizität wesentlich ist, weil es nicht möglich war, durch Verwendung von feinst gemahlenem Quarzpulver anstelle amorpher Kieselsäure zu einem brauchbaren Farbkörper zu gelangen. Die Primärteilchengröße bevorzugter oxidischer und silikatischer Materialien der Matrix ist vorzugsweise kleiner 30 nm, insbesondere um 20 nm; die Form der Primärpartikel ist unregelmäßig.

Die als Basismaterial in den Farbkörpern enthaltenen oxidischen und/oder silikatischen Materialien mit vollständig oder überwiegend röntgenamorpher Struktur und der geforderten BET-Oberfläche lassen sich durch bekannte Fällungsverfahren oder durch hydrothermale Synthese erhalten. Auch durch pyrogene Verfahren, etwa das bekannte Aerosil-Verfahren oder Lichtbogenverfahren, sind die amorphen Oxide erhältlich. Durch die niedrige Stampfdichte sind nach dem Aerosilverfahren pyrogen erzeugte Oxide weniger bevorzugt. Durch Fällungsverfahren erzeugte Kieselsäuren und Silikate werden besonders bevorzugt - Beispiele solcher Stoffe sind dem Firmenprospekt 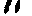 precipitated silicas und silicates" (3/88) der Degussa AG zu entnehmen.

Als farbgebende Komponente können übliche Eisenoxide oder -oxidhydrate, wie insbesondere Fe₂O₃, α- und γ-FeOOH und Fe₃O₄, in den Farbkörpern enthalten sein. Alternativ oder zusätzlich hierzu können eine oder mehrere beim Brand Fe₂O₃ bildende zwei- und/oder dreiwertige Fe-Verbindungen, wie Sulfate, Halogenide, Carbonate, basische Carbonate, Nitrate oder Acetate, anwesend sein. Bevorzugt enthalten die Farbkörper unmittelbar eines der zuvor genannten Oxide oder Oxidhydrate, die bereits in Pigmentqualität im Handel erhältlich sind. Der mittlere Teilchendurchmesser der Quelle für Fe₂O₃ ist vorzugsweise kleiner als 2 µm, insbesondere kleiner als 1 µm und besonders bevorzugt kleiner 0,2 µm; das Kornspektrum ist vorzugsweise eng. Zweckmäßigerweise ist die Fe-Quelle der farbgebenden Komponente insgesamt in einer Menge von 1 bis 25 Gew.-%, insbesondere 5 bis 15 Gew.-%, berechnet als Fe₂O₃ und bezogen auf den Farbkörper, in diesem enthalten.

Wie bereits zuvor ausgeführt, kann die Matrix außer dem oxidischen und/oder silikatischen Material Hilfsstoffe enthalten, die der Farbmodifizierung und/oder einer verbesserten Verarbeitung dienen. Außer den genannten Siliconölen und Alkoxysilanen kann es sich bei den Hilfsstoffen beispielsweise um übliche Mahlhilfsmittel, andere Pigmente, Fettsäuresalze und Wachse handeln. Sofern Hilfsstoffe in der Matrix enthalten sind, liegt deren Menge im Bereich größer 0 bis 20 Gew.-%, insbesondere im Bereich von 0,1 bis 10 Gew.-%. Zweckmäßigerweise besteht die Matrix aus 80 bis 100 Gew.-% eines oxidischen und/oder silikatischen Materials und 0 bis 20 Gew.-% Hilfsmittel.

Die erfindungsgemäßen Farbkörper lassen sich, wie zuvor gezeigt, in einfacher Weise durch intensives gemeinsames Kontaktieren der Bestandteile erhalten. Das Verfahren ist einfach und damit wirtschaftlich durchführbar. Sofern erwünscht, kann dem Kontaktieren eine thermische Behandlung bei 500 bis 800 °C nachgeschaltet werden, um während der Kontaktierung auftretende Gitterstörungen im Eisenoxid auszuheilen. Eine solche Behandlung wirkt sich aber im allgemeinen nur geringfügig auf die Farbwerte aus, so daß darauf meistens verzichtet werden kann.

Die rotbraun ausbrennenden Farbkörper lassen sich zur Einfärbung keramischer Massen, wie insbesondere Steinzeug- und Feinsteinzeugmassen, die üblicherweise 40 bis 60 % Tone, 20 bis 40 % Feldspäte, 5 bis 15 % Bruch und 0 bis 5 % Kalk enthalten, einsetzen. Zudem sind sie zur Herstellung von Dekorfarben geeignet, wie sie zum direkten Dekorieren und indirekten Dekorieren, daß heißt, über Abziehbilder, keramischer Substrate, wie Glas, Porzellan und Keramik, verwendet werden können.

Die erfindungsgemäßen Farbkörper zeichnen sich durch gute Farbwerte und einfache Zugänglichkeit aus. Bei gleichem Fe-Gehalt im Farbkörper und gleicher Menge Farbkörper in einer Feinsteinzeugmasse sind hiermit brillantere und farbintensivere Färbungen erhältlich als mit dem bisher meist üblichen Naturprodukt Grès de Thiviers. Gegenüber einem synthetischen Farbkörper mit im wesentlichen kristallinem SiO₂ in der Matrix zeichnen sich die erfindungsgemäßen Farbkörper durch einen geringeren Blauwert (b*) und einen niedrigeren L*-Wert aus.

Die Erfindung wird anhand der Beispiele und Vergleichsbeispiele weiter erläutert.

Allgemeine Vorschrift zur Herstellung der Farbkörper:

Die Quelle für Fe₂O₃ und Bestandteile der Matrix - soweit nicht anders angegeben, 10 Gew.-%, ber. als Fe₂O₃, und 90 Gew.-% Matrix, bezogen auf den Farbkörper - wurden in einer Misch-/Mahlvorrichtung miteinander kontaktiert. Durch intensives Kontaktieren erwärmte sich das Gemisch. Die Kontaktierdauer wurde anhand eines Probebrands ermittelt. Beim Kontaktieren in einer Kugelmühle betrug die Kontaktierdauer 2 Stunden.

Allgemeine Vorschrift zur Testung der Farkörper:

Eine keramische Feinsteinzeugmasse (Grès Porcellanato der Firma Cerdisa, Fiorano (IT)) wurde mit dem Farbkörper gemischt - soweit nicht anders angegeben, 4 Gew.-% Farbkörper und 96 Gew.-% keramische Masse. Nach Homogenisierung der Masse wurde diese mit 4 % Wasser angefeuchtet, in einer Laborpresse zu Probekörpern geformt und dann nach einer Vortrocknung innerhalb 60 Minuten (kalt - kalt) bei 1225 °C gebrannt. Die Farbwerte der ausgebrannten Steinzeugartikel wurden nach Cielab (DIN 5033, Teil 3) bestimmt mittels eines handelsüblichen Farbmeßgeräts (10° Beobachter, Normlicht D 65).

### Beispiel B 1 und Vergleichsbeispiele VB 1 bis VB 5

Der erfindungsgemäße Farbkkörper FK/B 1 wurde gemäß allgemeiner Vorschrift hergestellt aus 10 Gew.-% Fe₂O₃-Pigment (L 2915 der Firma BASF) und 90 Gew.-% gefällter Kieselsäure (FK 320 DS der Degussa AG), die amorph war und eine BET-Oberfläche von 170 m²/g aufwies, durch 2-stündiges Trockenmahlen in einer Kugelmühle.

Der nicht-erfindungsgemäße Farbkörper FK/VB 5 wurde in entsprechender Weise mit dem gleichen Farbpigment und Quarzpulver (d₅₀ 2 µm) hergestellt.

In der nachfolgenden Tabelle sind die Farbwerte (nach Cielab) von Probekörpern einer mit unterschiedlichen Farbkörpern eingefärbten und eingebrannten Feinsteinzeugmasse angegeben.

| Nr. | Farbkörper (FK) | Menge FK in der Masse (Gew.-%) | L* | a* | b* | c* |
|---|---|---|---|---|---|---|
| VB 1 | Grès de Thiviers | 4 | 59,1 | 12,9 | 14,8 | 19,6 |
| VB 2 | Grès de Thiviers | 8 | 52,2 | 15,2 | 15,4 | 21,6 |
| VB 3 | CK 32055 (Ferro) | 4 % | 56,7 | 15,0 | 17,3 | 22,9 |
| VB 4 | CP-RE-18 (Ithaka (JP)) | 4 % | 51,9 | 16,4 | 12,5 | 20,6 |
| VB 5 | FK/VB 5 | 4 % | Farbe wird beim Brand vollständig zerstört | | | |
| B 1 | FK/B1 | 4 | 51,9 | 17,4 | 14,5 | 22,7 |

Der erfindungsgemäße Farbkörper FK/B 1 weist gegenüber dem Handelsprodukt von Ithaka einen höheren Rotwert a* und eine höhere Brillanz (= höherer Chromawert C*) auf. Das Vergleichsbeispiel VB 3, dessen Farbkörper eine Matrix aus kristallinem SiO₂ enthält, zeigt eine ungenügende Farbtiefe und ist zu blaustichig. Der Farbkörper des Vergleichsbeispiels VB 5 zeigt keine Pigmenteigenschaften.

### Beispiele B 2 bis B 4

Untersucht wurde der Einfluß des Fe₂O₃-Gehalts im Farbkörper. Die Matrix bestand stets aus der Fällungskieselsäure FK 320 DS; eingesetzt wurde Fe₂O₃ in Pigmentqualität. Herstellung der Farbkörper durch 2-stündiges Trockenvermahlen in einer Kugelmühle. Testeinfärbung mit 4 % Farbkörper.

| Fe₂O₃-Gehalt Gew.-% im Farbkörper | Farbwerte des Prüfkörpers | | |
|---|---|---|---|
| | L* | a* | b* |
| 5 | 55,7 | 15,9 | 14,2 |
| 10 | 51,6 | 15,7 | 12,5 |
| 20 | 50,2 | 9,1 | 9,9 |

Durch die Einstellung des Fe₂O₃-Gehalts lassen sich die Farbeigenschaften in einem weiten Bereich beeinflussen. Durch eine Steigerung des Fe₂O₃-Gehalts im Farbkörper von 10 auf 20 Gew.-% sinkt der L*-Wert ab, daß heißt, die Farbe wird dunkler, jedoch nehmen gleichzeitig der a*-Wert (rot) und der Chromawert (Brillanz) ab.

### Beispiele B 5 bis B 8

Untersucht wurde der Einfluß der spezifischen Oberfläche der für die Matrix eingesetzten gefällten Kieselsäure. Die Farbkörper wurden gemäß allgemeiner Vorschrift hergestellt, wobei ein Fe₂O₃-Pigment chinesischer Provenienz in einer Menge von jeweils 10 Gew.-% eingesetzt wurde. Die Tabelle zeigt die Ergebnisse der Masseeinfärbung mit 4 % Farbkörper.

| Nr. | Matrix *) | BET (N₂) m²/g | L* | a* | b* |
|---|---|---|---|---|---|
| B 5 | Sident 9 | 45 | 58,2 | 12,1 | 13,4 |
| B 6 | Ultrasil VN 3 | 170 | 53,7 | 15,0 | 12,8 |
| B 7 | FK 320 (gemahlen) | 175 | 53,2 | 15,9 | 13,7 |
| B 8 | FK 700 | 700 | 57,0 | 12,5 | 13,6 |

| | | | | | |
|---|---|---|---|---|---|
| *) Bezeichnungen sind Handelsnamen der Firma Degussa AG | | | | | |

Eine Kieselsäure mit vergleichsweise geringer BET-Oberfläche (45 m²/g) führt zu einem Farbkörper, der deutlich weniger rot und weniger intensiv gefärbt ist als ein solcher unter Einsatz einer Kieselsäure mit etwa 170 m²/g. Auch eine sehr hohe BET-Oberfläche - z.B. 700 m²/g - der Matrix führt zu einer Minderung der Farbeigenschaften.

### Beispiele B 9 bis B 14

Untersucht wurde der Einfluß der Qualität der eingesetzten Fe-oxid-Pigmente beziehungsweise Quellen hierfür. Die Matrix bestand aus der Fällungskieselsäure FK 320. Die Menge Fe-oxid-Pigment, berechnet als Fe₂O₃, in den Farbkörpern betrug 10 Gew.-%. Die Einfärbung in der Masse betrug wie üblich 4 %. Die Ergebnisse folgen aus der Tabelle.

| Nr. | FE-oxid-Quelle | L* | a* | b* |
|---|---|---|---|---|
| B 9 | chinesische Provenienz | 53,2 | 15,9 | 13,7 |
| B 10 | Bayferrox 120 M (Bayer AG) | 55,3 | 13,6 | 12,2 |
| B 11 | Bayferrox 130 B (Bayer AG) | 56,3 | 10,9 | 10,2 |
| B 12 | Sicotrans L 2915 (BASF AG) | 56,6 | 15,8 | 17,2 |
| B 13 | Fe-oxid-Gelb 920 (Bayer AG) (= FeOOH) | 54,2 | 14,1 | 13,2 |
| B 14 | Fe(II)-sulfat | 64,5 | 7,0 | 14,4 |

In den Farbkörpern B 9 bis B 12 lag die Fe-Quelle als Fe₂O₃ vor, in B 13 als FeOOH. Je feinteiliger das Pigment, desto roter die Farbe des Farbkörpers nach dem Ausbrand, eine Primärteilchengröße des Pigments um/unter 100 nm wird besonders bevorzugt. In einem weiteren Beispiel, B 14, wurde als Fe₂O₃-bildende Fe-verbindung Eisen(II)sulfat eingesetzt; eine Verbesserung der Farbwerte ist durch Optimierung der Fe-Verbindung zu erwarten.

### Vergleichsbeispiel VB 6 und Beispiel B 16

Untersucht wurde der Einfluß der Intensität des Kontaktierens auf die Farbwerte des Farbkörpers - 90 Gew.-% Matrix aus amorpher Kieselsäure FK 320 und 10 Gew.-% Fe₂O₃ (chinesische Provenienz). Die Tabelle zeigt die Farbwerte der eingefärbten und gebrannten keramischen Masse.

| Nr. | Kontaktierung | L* | a* | b* |
|---|---|---|---|---|
| VB 6 | Schlagmühle 2 Minuten | 66 | 3,2 | 14,3 |
| B 16 | Naßkugelmühle 2 Stunden | 60,2 | 7,7 | 10,2 |
| B 9 | Trockenkugelmühle 2 Stunden | 53,2 | 15,9 | 13,7 |

### Beispiele B 17 und B 18

Hergestellt (2 h Trockenmahlung in der Kugelmühle) wurde ein Farbkörper aus 10 Gew.-% Fe₂O₃-Pigment und 90 Gew.-% einer Matrix aus 97,5 Gew.-% Fällungskieselsäure FK 320 und 2,5 Gew.-% Siliconöl als Hilfsmittel. Die Tabelle zeigt die Farbwerte der eingefärbten und gebrannten Prüfkörper dieser Beispiele im Vergleich zu dem analogen Farbkörper aus dem gleichen Pigment und dergleichen Kieselsäure, der in Abwesenheit des Hilfsmittels hergestellt wurde (B 9).

| Nr. | Farbkörper | Mahldauer (Minuten) | L* | a* | b* |
|---|---|---|---|---|---|
| B 17 | mit Siliconöl | 60 | 53,4 | 16,2 | 13,6 |
| B 18 | mit Siliconöl | 120 | 53,4 | 17,3 | 15,2 |
| B 9 | ohne Siliconöl | 120 | 53,2 | 15,9 | 13,7 |

### Beispiel B 19

Untersucht wurde der Einfluß des Nachtemperns des Farbkörpers - 2 h bei 700 °C - auf die Farbwerte. Die Tabelle zeigt die Farbwerte des Prüfkörpers mit der Einfärbung mit dem als Ausgangsprodukt dienenden Farbkörper FK/B 1 sowie mit dem daraus hergestellten getemperten Produkt FK/B 19.

| Nr. | Farbkörper | L* | a* | b* |
|---|---|---|---|---|
| B 1 | FK/B 1 (ohne Tempern) | 54,5 | 14,8 | 15,2 |
| B 19 | FK/B 19 (mit Tempern) | 53,4 | 15,9 | 15,5 |

## Patentansprüche

1. Rotbraun ausbrennender Farbkörper, enthaltend Fe₂O₃ und/oder eine oder mehrere beim Brand Fe₂O₃ bildende Eisenverbindungen als farbgebende Komponente in gleichmäßiger Verteilung in einer pulverförmigen Matrix auf der Basis eines oxidischen und/oder silikatischen Materials,
dadurch gekennzeichnet,
daß das oxidische und/oder silikatische Material der Matrix eine spezifische Oberfläche nach BET (DIN 66131) von gleich oder größer 40 m²/g aufweist und zu mindestens 50 % röntgenamorph ist, der Farbkörper die farbgebende Komponente in einer Menge von 1 bis 25 Gew.-%, berechnet als Fe₂O₃, enthält und daß er erhältlich ist durch intensives miteinander Inkontaktbringen der farbgebenden Komponente mit dem oxidischen und/oder silikatischen Material.

2. Farbkörper nach Anspruch 1,
dadurch gekennzeichnet,
daß das oxidische und/oder silikatische Material der Matrix zu mindestens 90 %, insbesondere zu mehr als 99 %, röntgenamorph ist.

3. Farbkörper nach Anspruch 1 oder 2,
dadurch gekennzeichnet,
daß das oxidische und/oder silikatische Material der Matrix aus röntgenamorphem SiO₂ oder röntgenamorphem SiO₂-reichen Silikat besteht.

4. Farbkörper nach Anspruch 3,
dadurch gekennzeichnet,
daß das oxidische und/oder silikatische Material der Matrix durch ein Fällungsverfahren oder ein Hydrothermalverfahren erzeugt wurde.

5. Farbkörper nach einem der Ansprüche 1 bis 4,
dadurch gekennzeichnet,
daß die spezifische Oberfläche (BET; DIN 66131) des oxidischen und/oder silikatischen Materials der Matrix 90 bis 300 m²/g, insbesondere 100 bis 200 m²/g, beträgt.

6. Farbkörper nach einem der Ansprüche 1 bis 5,
dadurch gekennzeichnet,
daß er Fe₂O₃ und/oder eine oder mehrere beim Brand Fe₂O₃ bildende Eisenverbindungen in einer Menge von 5 bis 15 Gew.-%, berechnet als Fe₂O₃, enthält.

7. Farbkörper nach einem der Ansprüche 1 bis 6,
dadurch gekennzeichnet,
daß er als farbgebende Komponente eine oder mehrere Fe-Verbindungen aus der Reihe Fe₂O₃, FeOOH und Fe₃O₄, jeweils mit einem Teilchendurchmesser von kleiner 2 µm, enthält.

8. Farbkörper nach einem der Ansprüche 1 bis 7,
dadurch gekennzeichnet,
daß die Matrix aus 80 bis 100 Gew.-% eines oxidischen und/oder silikatischen Materials und 0 bis 20 Gew.-% eines oder mehrerer Hilfsstoffe zur Farbmodifizierung und/oder Verarbeitung, insbesondere eines Siliconöls oder eines Alkoxysilans, besteht.

9. Farbkörper nach Anspruch 8,
dadurch gekennzeichnet,
daß die Matrix aus 90 bis 99,9 Gew.-% einer amorphen Kieselsäure und/oder eines amorphen SiO₂-reichen Silikats und 0,1 bis 10 Gew.-% eines Siliconöls besteht.

10. Farbkörper nach Anspruch 1,
dadurch gekennzeichnet,
daß eine mit 4 Gew.-% eines 10 Gew.-% Fe₂O₃ enthaltenden Farbkörpers gemäß Anspruch 1 eingefärbte Feinsteinzeugmasse (Grès Porcellanato) nach dem Brand im CIE-Lab-System (DIN 5033, Teil 3) folgende Farbwerte aufweist:
L* kleiner 60, insbesondere 50 bis 57,
a* größer 10, insbesondere 12 bis 18,
b* 10 bis 18.

11. Verfahren zur Herstellung eines rotbraun ausbrennenden Farbkörpers, umfassend gleichmäßige Verteilung einer farbgebenden Komponente aus Fe₂O₃ oder/und einer oder mehreren beim Brand Fe₂O₃ bildenden Eisenverbindungen in einer pulverförmigen Matrix auf der Basis eines oxidischen und/oder silikatischen Materials,
dadurch gekennzeichnet,
daß man als oxidisches und/oder silikatisches Material für die Matrix ein solches mit einer spezifischen Oberfläche nach BET (DIN 66131) von gleich oder größer 40 m²/g, das zu mindestens 50 % röntgenamorph ist, verwendet, die farbgebende Komponente in einer Menge von 1 bis 25 Gew.-%, bezogen auf den Farbkörper, einsetzt und die farbgebende(n) Eisenverbindung(en) und das Material der Matrix, einschließlich gegebenenfalls anwesender Hilfsstoffe, in einer Vorrichtung zum Mischen und/oder Mahlen unter Eintrag mechanischer Energie intensiv gemeinsam mischt und/oder vermahlt.

12. Verfahren nach Anspruch 9,
dadurch gekennzeichnet,
daß man die sämtlichen Bestandteile des Farbkörpers trocken mischt und/oder vermahlt, insbesondere unter Verwendung eines Attritor-Mischers, einer Schwingmühle oder Kugelmühle.

13. Verwendung eines rotbraun ausbrennenden Farbkörpers gemäß einem der Ansprüche 1 bis 10 zur Einfärbung keramischer Massen, insbesondere Feinsteinzeugmassen, sowie zur Herstellung von Dekorfarben und Abziehbildern zum Dekorieren keramischer Substrate, insbesondere Keramik, Porzellan und Glas.
